# FASCICULE DE BREVET EUROPEEN

(11) **EP 2 199 310 B1**
(45) Date de publication et mention de la délivrance du brevet: **02.05.2012**
(21) Numéro de dépôt: 09177715.1
(22) Date de dépôt: 02.12.2009
(51) Int. Cl.: C08F 8/12, C08F 8/42, C08F 10/00, C08L 43/04

(54) **Composition réticulable comprenant un polymère greffé silane et un composé latent**
Vernetzbare Zusammensetzung enthaltend ein Silangepfropftes Polymer und eine latente Verbindung
Crosslinkable composition comprising a silane grafted polymer and a latent compound

(30) Priorité: 22.12.2008 FR 0858920
(43) Date de publication de la demande: 23.06.2010
(73) Titulaire: Nexans, 75008 Paris (FR)
(72) Inventeur: Alric, Jérôme, 38080, L'ISLE D'ABEAU (FR); Pinto, Olivier, 69003, LYON (FR); Marty, Jean-Michel, 69110, SAINTE FOY LES LYON (FR); Abeguile, Mikael, 69630, CHAPONOST (FR)
(74) Mandataire: Peguet, Wilfried

(56) Documents cités:
- EP-A- 1 092 757
- EP-A- 1 256 593
- US-A- 4 101 513

## Description

La présente invention se rapporte à une composition réticulable comprenant un polymère d'oléfine comportant des groupements silane hydrolysables et un composé latent, ainsi qu'à un procédé de fabrication d'un article réticulé à partir de ladite composition réticulable.

Elle s'applique typiquement, mais non exclusivement, à la fabrication d'articles réticulés du type couche isolante pour câble électrique et/ou optique, ou du type tube ou tuyau de canalisation pour le transport d'eau, de pétrole ou de gaz.

Les techniques actuelles pour réticuler des compositions polymères à base d'une polyoléfine avec des groupements silane hydrolysables utilisent des catalyseurs de réticulation du type sel d'étain comme par exemple le dibutyle étain dilaurate (DBTDL). Toutefois, ces catalyseurs sont néfastes pour l'environnement et vont devoir être remplacés par des catalyseurs moins polluants selon les réglementations à venir.

Pour pallier cet inconvénient, le document EP-1 256 593 propose de réticuler une composition à base de polyéthylène en utilisant, comme catalyseur de réticulation, un acide sulfonique aromatique ArSO₃H ou un de ses précurseurs, les précurseurs étant des composés aptes à se convertir par hydrolyse en acide aryle sulfonique. Toutefois, l'acide sulfonique aromatique ou ses précurseurs sont des composés très sensibles à l'humidité. Ainsi, leur durée de stockage et d'utilisation est fortement limitée. De plus, ce catalyseur ne garantit pas l'absence de formation de gel lors d'une étape d'extrusion, conséquente à une catalyse de réticulation prématurée dans une extrudeuse. Enfin, ce catalyseur, de type acide, n'est pas compatible avec une composition dite « chargée », contenant notamment des charges basiques telles que des hydroxydes métalliques.

Le but de la présente invention est de pallier les inconvénients des techniques de l'art antérieur en proposant notamment une composition à base de polyoléfine réticulable qui est insensible à l'humidité et écologique, et qui peut être mise en oeuvre avec n'importe quel type de polyoléfine et à des températures relativement élevées.

La présente invention a pour objet une composition réticulable telle que définie dans l'objet de la revendication 1.

On entend par « catalyseur de réticulation » un catalyseur d'hydrolyse et de condensation de fonctions silanol.

Le polymère selon l'invention comprend une chaîne principale, comportant une séquence linéaire ou ramifiée d'unités constitutives, située entre deux groupements terminaux aux extrémités de ladite chaîne principale. De préférence, les extrémités de la chaîne principale ne comportent pas de groupements silane hydrolysables.

Le polymère comportant sur sa chaîne principale des groupements silane hydrolysables est appelé dans la suite de la description « polymère greffé silane ».

Le terme « polymère » en tant que tel signifie de façon générale homopolymère ou copolymère. Le polymère d'oléfine, ou polyoléfine, de l'invention peut donc être un homo- ou co-polymère d'oléfine, et peut être notamment un polymère thermoplastique ou un élastomère. De préférence, le polymère d'oléfine est un polymère d'éthylène ou de propylène.

A titre d'exemple de polymères d'éthylène, on peut citer le polyéthylène linéaire basse densité (LLDPE), le polyéthylène basse densité (LDPE), l'homo-polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR) tels que par exemple les terpolymères d'éthylène propylène diène monomère (EPDM), et leurs mélanges.

La composition de l'invention peut bien entendu comprendre au moins un polymère d'oléfine comportant sur sa chaîne principale des groupements silane hydrolysables, c'est-à-dire qu'elle peut comprendre un mélange de plusieurs polymères d'oléfine comportant sur leur chaîne principale des groupements silane hydrolysables.

En outre, elle peut comprendre ou non d'autres types de polymères, différents des polymères d'oléfine de l'invention (i.e. polymère d'oléfine comportant sur sa chaîne principale des groupements silane hydrolysables).

Lorsque la composition réticulable de l'invention comprend d'autres types de polymères différents des polymères d'oléfine, elle peut se composer d'au moins 50 parties en poids de polymères d'oléfine de l'invention pour 100 parties en poids de polymère dans ladite composition, et de préférence d'au moins 80 parties en poids de polymères d'oléfine de l'invention pour 100 parties en poids de polymère dans ladite composition.

Lorsque la composition réticulable de l'invention ne comprend pas d'autres types de polymères différents des polymères d'oléfine comportant sur leur chaîne principale des groupements silane hydrolysables, elle se compose alors uniquement d'un ou de plusieurs polymères d'oléfine de l'invention en tant que polymère dans ladite composition.

Les groupements silane hydrolysables du polymère de l'invention peuvent être des groupements alcoxysilanes et/ou des groupements carboxysilanes, de préférence des groupements alcoxysilanes.

A titre d'exemple, le polymère greffé silane peut être obtenu par greffage de vinyle alcoxysilane sur au moins un polymère d'oléfine (ou polyoléfine) tel que décrit ci-avant.

Le polymère greffé silane peut également être obtenu par copolymérisation in situ d'au moins un monomère d'oléfine, de préférence au moins un monomère d'éthylène, avec un vinyle alcoxysilane. On peut citer plus particulièrement les copolymères d'éthylène et de vinyl silane (EVS).

La teneur du composé latent dans la composition peut être de 50 à 50000 ppm, de préférence de 100 à 5000 ppm. L'abréviation « ppm » dans la présente description signifie « parties par million massiques».

Le composé latent, ou en d'autres termes le catalyseur de réticulation latent, apte à libérer un catalyseur de réticulation sous l'action d'une élévation de température et/ou d'un rayonnement actinique peut être défini selon plusieurs variantes.

Selon une première variante, le composé latent est un composé ionique apte à libérer une base, notamment une base forte, comme catalyseur de réticulation. Ce composé latent est alors appelé générateur ionique de base.

La base apte à être libérée peut être de préférence une amine tertiaire. Dans ce cas, le composé latent apte à libérer une amine tertiaire peut être choisi parmi les sels d'ammonium d'acides alpha-cétocarboxyliques ; les sels d'ammonium d'acides carboxyliques portant un groupement aromatique tels que par exemple les sels de dimethylbenzyl ammonium d'acide alpha-naphtyle ou les sels de diazabicycloundecene d'acide anthracene-9-carboxylique ; les sels de N-(benzophenonymethyl)-tri-N-alkyl-ammonium triphenylalkyl-borates, les sels de benzhydrylammonium, et les iodures de trialkylfluorenyl ammonium, ou un de leurs mélanges.

Selon une deuxième variante, le composé latent est un composé non ionique apte à libérer une base, notamment une base forte, comme catalyseur de réticulation. Ce composé latent est alors appelé générateur non ionique de base.

La base apte à être libérée peut être de préférence une amine tertiaire.

L'amine tertiaire peut être plus particulièrement une amidine, cette dernière pouvant notamment être choisie parmi les diazabicyclooctanes, les N-alkyl-morpholines, les tétramethylguanidines (TMG), les diazabicyclononenes (DBN), et les diazabicycloundecenes (DBU). Dans ce cas, le composé latent apte à libérer une amidine peut être choisi parmi les diazabicyclononanes et les diazabicycloundecanes.

On peut également citer d'autres composés latents aptes à libérer une amine tertiaire, ces composés latents étant par exemple des amines tertiaires encombrées. Ces amines tertiaires encombrées peuvent être notamment le 4-(methylthiobenzoyl)-1-morpholino-ethane, ou le (4-morpholino-benzol)-1-benzyl-1-dimethyl-amino propane.

Entre les générateurs ioniques ou non ioniques base, ce sont les générateurs non ioniques de base qui sont préférés puisque ils présentent une meilleure compatibilité physicochimique avec le polymère greffé silane de l'invention comme notamment une meilleure solubilité dans ledit polymère.

La composition selon l'invention peut comprendre d'autres composés bien connus de l'homme du métier comme par exemple des charges ignifugeantes ou des photosensibilisateurs.

Un autre objet selon l'invention est un procédé de fabrication d'un article réticulé.

Dans une première variante, le procédé de fabrication d'un article réticulé comprend les étapes consistant à :
i. chauffer la composition telle que définie ci-avant afin de libérer le catalyseur de réticulation du composé latent, et
iii. réticuler la composition obtenue à l'étape i.

L'étape de réticulation iii du procédé de l'invention peut être classiquement réalisée en présence d'humidité et à température contrôlée.

Dans un mode de réalisation particulier, l'étape de chauffage i est réalisée au niveau de la tête d'extrusion d'une extrudeuse, ou après extrusion de la composition.

Dans une deuxième variante, le procédé de fabrication d'un article réticulé comprend les étapes consistant à :
ii. exposer la composition telle que définie ci-avant à un rayonnement actinique afin de libérer le catalyseur de réticulation du composé latent, le rayonnement actinique ayant de préférence une longueur d'onde allant de 150 nm à 800 nm, de préférence une longueur d'onde allant de 185 nm à 800 nm (UV-visible) et encore plus préférentiellement une longueur d'onde allant de 185 nm à 400 nm (UV), et
iii. réticuler la composition obtenue à l'étape ii.

L'étape de réticulation iii du procédé de l'invention peut être classiquement réalisée en présence humidité et à température contrôlée.

Dans un mode de réalisation particulier, l'étape d'exposition ii est réalisée après extrusion de la composition.

Dans une troisième variante, le procédé de fabrication d'un article réticulé comprend, dans un ordre indifférent les étapes i et ii telles que décrites ci-avant, et l'étape consistant à :
iii. réticuler la composition obtenue à l'étape précédente.

L'étape de réticulation iii du procédé de l'invention peut être classiquement réalisée en présence humidité et à température contrôlée.

On entend par les termes « ordre indifférent », le fait que l'étape i peut être réalisée antérieurement, concomitamment, ou postérieurement à l'étape ii.

Ainsi, dans le procédé de l'invention quelque soit la variante du procédé prise en compte, le catalyseur de réticulation nécessaire à la réaction de réticulation est produit in situ, dans la composition.

Le composé latent pourra être facilement choisi selon la température et/ou la longueur d'onde du rayonnement actinique nécessaire(s) à la libération du catalyseur de réticulation.

Une méthode de détermination de la température à laquelle le catalyseur va se libérer, ou température de début de libération, peut être classiquement réalisée par DSC pour l'anglicisme « *Differential Scanning Calorimetry* », sous une atmosphère d'azote, avec une rampe de température de 10°C/min. Cette méthode est basée sur le principe de la réaction d'amorçage thermique de la réaction de polymérisation d'un époxyde consécutive à la libération thermique du catalyseur de réticulation basique provenant du composé latent. Le composé latent est typiquement solubilisé (1 % en poids) dans un liquide de dilution du type époxyde liquide. Cet époxyde doit être stable à une température suffisamment élevée pour ne pas se décomposer avant que le composé latent ne libère in situ le catalyseur. Un exemple d'époxyde liquide peut être le polypropylène glycol époxydé commercialisé par la société DOW sous la référence DER 736, cet époxyde étant stable jusqu'à une température de 200°C. La polymérisation de l'époxyde catalysée par le catalyseur de réticulation provenant du composé latent est une réaction exothermique. Par conséquent, le pic exothermique formé lors de la réaction de polymérisation grâce audit catalyseur est facilement identifiable sur la courbe d'analyse DSC. La température de début de libération du catalyseur de réticulation est donc repérable à la base du pic exothermique formé.

La méthode de détermination de la longueur d'onde à laquelle le catalyseur va se libérer est classiquement réalisée à l'aide d'un spectrophotomètre d'absorption UV - Visible. Le composé latent, ou en d'autres termes le photoamorceur latent, est dilué dans un solvant inerte et transparent dans le domaine de longueur d'onde considéré (de 185 nm à 800 nm) tel que l'acétonitrile. La solution est soumise à un rayonnement monochromatique en balayant un domaine de longueur d'onde de 185 nm à 800 nm. L'intensité de la lumière transmise est mesurée de façon à déduire le taux de lumière absorbée en fonction de la longueur d'onde (spectre d'absorption). Le maximum d'absorption identifié dans le spectre d'absorption obtenu permet de s'assurer que le photoamorceur latent est apte à libérer un catalyseur de réticulation à cette absorption maximum. Ainsi, la ou les source(s) lumineuse(s) UV-visible seront sélectionnées en fonction de ce maximum d'absorption. Inversement, le photoamorceur latent pourra être sélectionné en fonction du ou des source(s) lumineuse(s) UV-visible disponible(s) commercialement.

Préalablement à l'étape i ou ii, la composition peut être mélangée à une température telle que le polymère soit à l'état fondu et telle que cette température soit inférieure à la température de libération du catalyseur de réticulation. On entend par « état fondu » un état dans lequel le polymère greffé silane de l'étape i est dans un état malléable. Cet état malléable, bien connu de l'homme du métier, peut être classiquement atteint lorsque le polymère en question est chauffé à une température environ égale ou supérieure à sa température de fusion lorsque ce polymère est thermoplastique.

En outre, le choix du composé peut être fait en fonction de la température de mise en oeuvre du polymère afin de ne pas libérer thermiquement le catalyseur de réticulation lorsque le polymère greffé silane est à l'état fondu.

Lorsque le procédé comprend ladite étape préalable de mélange telle que mentionnée ci-avant, cette étape peut être réalisée dans une extrudeuse.

Le polymère greffé silane de la composition selon la présente invention peut être préparé par des procédés bien connus de l'homme du métier sous les noms de procédé MONOSIL^{®} et de procédé SIOPLAS^{®}.

Dans le cas du procédé MONOSIL^{®}, la composition selon l'invention est obtenue à partir d'un mélange M1 comprenant les réactifs permettant d'obtenir le polymère greffé silane ainsi que le composé latent selon l'invention. Ce mélange M1 est chauffé à une température suffisante pour obtenir un polymère greffé silane (étape de greffage), et donc une composition conformément à l'invention. Les étapes suivantes sont celles décrites selon le procédé de l'invention.

Dans le cas du procédé SIOPLAS^{®}, la composition selon l'invention est obtenue à partir d'un mélange M2 comprenant les réactifs permettant d'obtenir le polymère greffé silane. Ce mélange M2 est chauffé à une température suffisante pour obtenir un polymère greffé silane (étape de greffage). Puis, on incorpore dans le mélange M2 le composé latent selon l'invention, et l'on obtient ainsi une composition conformément à l'invention. Les étapes suivantes sont celles décrites selon le procédé de l'invention.

Un autre objet de l'invention concerne un article réticulé obtenu à partir de la composition selon l'invention ou obtenu à partir du procédé selon l'invention.

Cet article peut être sous forme :
- d'une couche isolante pour câble électrique et/ou optique, ou
- d'un tube ou d'un tuyau, comme par exemple des canalisations pour le chauffage hydronique, des conduites d'alimentation d'eau, des canalisations pour le transport du gaz ou de pétrole pour les installations off-shore, ...etc.

D'autres caractéristiques et avantages de la présente invention apparaîtront à la lumière des exemples qui vont suivre, lesdits exemples étant donnés à titre illustratif et nullement limitatif.

### Exemples

### Préparation des compositions

On prépare les compositions 1 à 3 dont les constituants sont mentionnés dans le tableau 1 ci-dessous.

**Tableau 1**

| Composition | 1 | 2 | 3 |
|---|---|---|---|
| EVS (% en poids) | 44 | - | - |
| LLDPE-greffé silane (% en poids) | - | 36 | 37 |
| Charge ignifugeante (% en poids) | 52 | 60 | 61 |
| Mélange-maître (% en poids) | 4 | 4 | 2 |
| | - | - | - |
| DBTm (ppm) | - | - | 75 |
| | - | - | - |
| PBL (ppm) | 2000 | 2000 | - |
| Photo-sensibilisateur (ppm) | 2000 | 2000 | - |

L'origine des constituants mentionnés dans le tableau 1 est la suivante :
- EVS correspond au copolymère d'éthylène-vinyl-silane commercialisé par la société Borealis sous le nom de LE4421.
- LLDPE-greffé silane correspond au polyéthylene basse densité linéaire commercialisé par la société Exxon Mobil Chemical sous le nom de LL4004 greffé avec de du vinyl-trimétoxy-silane en présence de dicumyle peroxyde selon le protocole décrit dans le document brevet FR-2 030 899.
- Charge ignifugeante correspond au Mg(OH)₂ commercialisé par la société Albemarle sous la référence Magnifin H10.
- DBTm correspond au bis-(2-éthyle hexyle mercapto acétate) de dibutyle étain commercialisé par la société Crompton sous la référence MARK 17M.
- PBL est un générateur non ionique de base apte à libérer une amine tertiaire, commercialisé par la société Ciba sous la référence CGI 1193.
- Photosensibilisateur correspond à l'isopropyl thioxanthone commercialisé par la société Rahn sous la référence GENOCURE-ITX.

Tout d'abord, différents mélange-maîtres sont préparés comme suit :
- lorsque le composé latent est le PBL, on incorpore 5 % en poids du composé latent ainsi que 5 % en poids du photosensibilisateur, d'une part, dans une matrice EVS lorsqu'il s'agit de réticuler un EVS chargé (composition 1), et d'autre part, dans une matrice LLDPE (non greffé silane) lorsqu'il s'agit de réticuler un LLDPE greffé silane chargé (composition 2).
- lorsque le catalyseur est du type sel de dibutyle étain, on incorpore 0,36 partie en poids dudit catalyseur dans une matrice de LLDPE (non greffé silane) lorsqu'il s'agit de réticuler du LLDPE-greffé silane chargé (Composition 3).

Ensuite, ces différents mélange-maîtres sont ajoutés par la trémie d'une extrudeuse dans un mélange d'EVS ou de LLDPE greffé-silane conformément aux compositions référencées dans le tableau 1. Le profil de température de l'extrudeuse permet au mélange de polymères obtenu de se trouver à l'état fondu. La température maximale du profil est en outre inférieure à la température de libération du catalyseur de réticulation des composés latents (compositions 1 et 2). Plus particulièrement, le profil de température de l'extrudeuse est le suivant : 120°C - 150°C - 160°C, avec une température en tête d'extrusion de 170°C. A 170°C, la stabilité thermique des composés latents PAG et PBL est suffisante pour ne pas libérer leur catalyseur de réticulation respectif au cours du mélange des compositions dans l'extrudeuse. Les différentes quantités de mélange-maîtres respectifs dans les compositions 1 à 3 sont détaillées dans le tableau 1. Les teneurs en composés latents, en sel de dibutyle étain et en photosensibilisateur pour les compositions 1 à 3 sont également indiquées dans le tableau 1.

### Extrusion des compositions et irradiation UV

L'étape d'extrusion des différentes compositions 1 à 3 est réalisée à la vitesse de 10m/mn, en déposant une épaisseur de 300µm de ladite composition extrudée autour d'un fil conducteur de cuivre de 0,85mm² de section transversale.

Puis, uniquement pour les compositions comprenant un composé latent, le fil isolé obtenu est immédiatement irradié par un rayonnement UV (premier traitement UV), d'une longueur d'onde comprise entre 150 et 550 nm, à température ambiante, à l'aide d'un four de type HP6 commercialisé par la société FUSION UV SYSTEMS équipé d'une ampoule à vapeur de mercure moyenne pression de type « D » d'une puissance de 200W/cm et d'un module de réflecteur arrière. Afin d'améliorer l'efficacité du catalyseur provenant du composé latent, une étape de post-traitement UV peut être nécessaire. Celle-ci peut être réalisée sur le fil isolé à température ambiante consécutivement à l'étape d'extrusion. Dans le cadre des exemples décrits, le post-traitement UV consiste à passer le fil isolé 10 fois à 10m/mn dans le four UV.

Les compositions ayant subi un premier traitement UV, et éventuellement un post-traitement UV, sont indiquées dans le tableau 2 ci-après.

Bien entendu, augmenter le nombre de lampes ainsi que leur puissance peuvent permettre de ne pas effectuer de post-traitement UV. Le nombre de lampes ainsi que leur puissance pourront être facilement choisis par l'homme du métier pour obtenir une réticulation optimale en fonction de la durée de l'irradiation et de l'épaisseur de la composition à irradier.

### Réticulation des compositions extrudées

Les conditions de réticulation sont indiquées dans le tableau 2 ci-après. Elles sont de deux types :
- réticulation dite « forcée » dans les conditions d'un sauna, à savoir pendant 48h, à 80°C et avec 100% d'humidité relative, et
- réticulation dite « non forcée » dans des conditions d'auto-réticulation, à savoir pendant 2 jours, à 25°C et avec 50% d'humidité relative.

### Caractérisation du degré de réticulation

Une fois les compositions extrudées ayant subi les conditions d'un sauna ou les conditions d'auto-réticulation (voir tableau 2), le degré de réticulation est caractérisé selon des méthodes bien connues de l'homme du métier.

Pour les compositions chargées 1, 2 et 3, la méthode choisie est celle de la mesure du fluage à chaud sous charge.

### Fluage à chaud sous charge

La norme NF EN 60811-2-1 décrit la mesure du fluage à chaud d'un matériau sous charge. Le test correspondant est communément désigné par l'anglicisme Hot Set Test.

Il consiste concrètement à lester une extrémité d'une éprouvette de matériau avec une masse correspondant à l'application d'une contrainte équivalente à 0,2MPa, et à placer l'ensemble dans une étuve chauffée à 200+/-1°C pendant une durée de 15 minutes. Au terme de ce délai, on relève l'allongement à chaud sous charge de l'éprouvette, exprimé en %. La masse suspendue est alors retirée, et l'éprouvette est maintenue dans l'étuve pendant 5 nouvelles minutes. L'allongement permanent restant, également appelé rémanence, est alors mesuré avant d'être exprimé en %.

On rappelle que plus un matériau est réticulé, plus les valeurs d'allongement et de rémanence seront faibles. On précise par ailleurs que dans le cas où une éprouvette viendrait à se rompre en cours d'essai, sous l'action conjuguée de la contrainte mécanique et de la température, le résultat au test serait alors logiquement considéré comme un échec.

Le tableau 2 reprend les résultats des fluages à chaud obtenus sur les échantillons considérés.

**Tableau 2**

| Composition | Traitement UV (premier traitement UV) | Post-traitement UV | Conditions de réticulation | Fluage à chaud | |
|---|---|---|---|---|---|
| | | | | Allongement sous charge (%) | Rémanence (%) |
| 1 | OUI | OUI | AUTO-RETICULATION | 95 | 25 |
| | OUI | OUI | SAUNA | 75 | 15 |
| 2 | OUI | OUI | AUTO-RETICULATION | 40 | 5 |
| | OUI | OUI | SAUNA | 30 | 0 |
| 3 | NON | NON | AUTO-RETICULATION | ECHEC | ECHEC |

Pour les compositions chargées, à savoir la composition 1 (EVS + Mg(OH)₂ + PBL) et la composition 2 (LLDPE-greffé silane + Mg(OH)₂ + PBL), la réticulation par PBL s'avère particulièrement efficace, ce que montrent les faibles valeurs d'allongement et de rémanence (fluage à 200°C). Le post-traitement UV permet en outre d'améliorer efficacement la réticulation.

Enfin, les compositions chargées 1 et 2, après post-traitement UV, sont auto-réticulantes, contrairement à la composition chargée 3 (comparée à la composition chargée 2) où l'auto-réticulation ne se fait pas après 48 heures, voire même après plusieurs dizaines de jours. On note ainsi un effet bénéfique du catalyseur de réticulation latent (PAG PBL) par rapport au sel d'étain (DBTm) qui se répercute non seulement sur la toxicité du mélange ainsi obtenu, mais aussi sur les conditions de réticulation du mélange.

## Revendications

1. Composition réticulable comprenant :
- un polymère d'oléfine comportant sur sa chaîne principale des groupements silane hydrolysables, et
- un composé latent apte à libérer un catalyseur de réticulation sous l'action d'une élévation de température et/ou d'un rayonnement actinique, ledit catalyseur de réticulation étant un catalyseur d'hydrolyse et de condensation de fonctions silanol,
**caractérisée en ce que** le composé latent est un composé apte à libérer une base comme catalyseur de réticulation.

2. Composition selon la revendication 1, **caractérisée en ce que** le polymère d'oléfine est un polymère d'éthylène.

3. Composition selon la revendication 1 ou 2, **caractérisée en ce que** les groupements silane hydrolysables sont des groupements alcoxysilanes et/ou des groupements carboxysilanes.

4. Composition selon l'une quelconque des revendications précédentes, **caractérisée en ce que** la teneur du composé latent dans la composition est de 50 à 50000 ppm.

5. Composition selon l'une quelconque des revendications 1 à 4, **caractérisée en ce que** le composé latent est un composé ionique apte à libérer une base comme catalyseur de réticulation.

6. Composition selon la revendication 5, **caractérisée en ce que** la base est une amine tertiaire.

7. Composition selon la revendication 5 ou 6, **caractérisée en ce que** le composé latent est choisi parmi les sels d'ammonium d'acides alpha-cétocarboxyliques ; les sels d'ammonium d'acides carboxyliques portant un groupement aromatique ; les sels de N-(benzophenonymethyl)-tri-N-alkyl-ammonium triphenylalkyl-borates ; les sels de benzhydrylammonium ; et les iodures de trialkylfluorenyl ammonium ; ou un de leurs mélanges.

8. Composition selon l'une quelconque des revendications 1 à 4, **caractérisée en ce que** le composé latent est un composé non ionique apte à libérer une base comme catalyseur de réticulation.

9. Composition selon la revendication 8, **caractérisée en ce que** la base est une amine tertiaire.

10. Composition selon la revendication 9, **caractérisée en ce que** l'amine tertiaire est choisie parmi les diazabicyclooctanes ; les N-alkyl-morpholines ; les tétramethylguanidines (TMG) ; les diazabicyclononenes (DBN) ; et les diazabicycloundecenes (DBU).

11. Composition selon la revendication 9 ou 10, **caractérisée en ce que** le composé latent est choisi parmi les diazabicyclononanes ; et les diazabicycloundecanes.

12. Composition selon la revendication 9, **caractérisée en ce que** le composé latent est choisi parmi le 4-(methylthiobenzoyl)-1-morpholinoethane ; et le (4-morpholinobenzol)-1-benzyl-1dimethylmino propane.

13. Procédé de fabrication d'un article réticulé comprenant les étapes consistant à :
i. chauffer la composition telle que définie aux revendications 1 à 12 afin de libérer le catalyseur de réticulation du composé latent, et
iii. réticuler la composition obtenue à l'étape i.

14. Procédé selon la revendication 13, **caractérisé en ce que** l'étape de chauffage i est réalisée au niveau de la tête d'extrusion d'une extrudeuse ou après extrusion de la composition.

15. Procédé de fabrication d'un article réticulé comprenant les étapes consistant à :
ii. exposer la composition telle que définie aux revendications 1 à 12 à un rayonnement actinique afin de libérer le catalyseur de réticulation du composé latent, et
iii. réticuler la composition obtenue à l'étape ii.

16. Procédé selon la revendication 15, **caractérisé en ce que** l'étape ii d'exposition à un rayonnement actinique est réalisée sous un rayonnement ayant une longueur d'onde allant de 185 nm à 400 nm.

17. Procédé selon la revendication 15 ou 16, **caractérisé en ce que** l'étape d'exposition ii est réalisée après extrusion de la composition.

## Claims

1. A cross-linkable composition comprising:
- an olefin polymer including on its main chain hydrolyzable sliane groups, and
- a latent compound capable of releasing a cross-linking catalyst under the action of a rise in temperature and/or actinic radiation, said cross-linking catalyst being a catalyst for hydrolysis and condensation of silanol functions,
**characterized in that** the latent compound is a compound capable of releasing a base as a cross-linking catalyst.

2. The composition according to claim 1, **characterized in that** the olefin polymer is an ethylene polymer.

3. The composition according to claim 1 or 2, **characterized in that** the hydrolyzable silane groups are alkoxysilane groups and/or carboxysilane groups.

4. The composition according to any of the preceding claims, **characterized in that** the content of the latent compound in the composition is from 50 to 50,000 ppm.

5. The composition according to any of claims 1 to 4, **characterized in that** the latent compound is an ionic compound capable of releasing a base as a cross-linking catalyst.

6. The composition according to claim 5, **characterized in that** the latent compound is a tertiary amine.

7. The composition according to claim 5 or 6, **characterized in that** the latent compound is selected from ammonium salts of alpha-ketocarboxylic acids; the ammonium salts of carboxylic acids bearing an aromatic group; N-(benzophenonylmethyl)-tri-N-alkyl-ammonium triphenylalkylborate salts; benzhydrylammonium salts; and trialkylfluorenylammonium iodides; or one of their mixtures.

8. The composition according to any of claims 1 to 4, **characterized in that** the latent compound is a non-ionic compound capable of releasing a base as a cross-linking catalyst.

9. The composition according to claim 8, **characterized in that** the base is a tertiary amine.

10. The composition according to claim 9, **characterized in that** the tertiary amine is selected from diazabicyclo-octanes; N-alkyl-morpholines; tetramethylguanidines (TMG); diazabicyclononenes (DBN); diazabicyclo-undecenes (DBU).

11. The composition according to claim 9 or 10, **characterized in that** the latent compound is selected from diazabicyclononanes; and diazabicyclo-undecanes.

12. The composition according to claim 9, **characterized in that** the latent compound is selected from 4-(methylthiobenzoyl)-1morpholinoethane; and (4-morpholinobenzoyl)-1-benzyl-1-dimethylaminopropane.

13. A method for making a cross-linked article comprising the steps of:
i. heating the composition as defined in claims 1 to 12 in order to release the cross-linking catalyst from the latent compound, and
iii. cross-linking the composition obtained in step i.

14. The method according to claim 13, **characterized in that** the heating step i is carried out at the extrusion head of an extruder or after extrusion of the composition.

15. A method for making a cross linked article comprising the steps of:
ii. exposing the composition as defined in claims 1 to 12, to actinic radiation in order to release the cross-linking catalyst from the latent compound, and
iii. cross-linking the composition obtained in step ii.

16. The method according to claim 15, **characterized in that** step ii for exposure to actinic radiation is carried out under radiation having a wavelength ranging from 185 nm to 400 nm.

17. The method according to claim 15 or 16, **characterized in that** the exposure step ii is carried out after extrusion of the composition.

## Patentansprüche

1. Vernetzbare Zusammensetzung, die umfasst:
- ein Olefinpolymer, das auf seiner Hauptkette hydrolysierbare Silangruppen aufweist, und
- eine latente Verbindung, die imstande ist, unter Einwirkung einer Temperaturerhöhung und/oder einer aktinischen Strahlung einen Vernetzungskatalysator freizusetzen, wobei der Vernetzungskatalysator ein Hydrolyse- und Kondensationskatalysator von Silanolfunktionen ist,
**dadurch gekennzeichnet, dass** die latente Verbindung eine Verbindung ist, die imstande ist, eine Base als Vernetzungskatalysator freizusetzen.

2. Zusammensetzung nach Anspruch 1, **dadurch gekennzeichnet, dass** das Olefinpolymer ein Ethylenpolymer ist.

3. Zusammensetzung nach Anspruch 1 oder 2, **dadurch gekennzeichnet, dass** die hydrolysierbaren Silangruppen Alcoxysilan- und/oder Carboxysilangruppen sind.

4. Zusammensetzung nach einem der vorangehenden Ansprüche, **dadurch gekennzeichnet, dass** der Gehalt der latenten Verbindung in der Zusammensetzung 50 bis 50000 ppm beträgt.

5. Zusammensetzung nach einem der Ansprüche 1 bis 4, **dadurch gekennzeichnet, dass** die latente Verbindung eine ionische Verbindung ist, die imstande ist, eine Säure als Vernetzungskatalysator freizusetzen.

6. Zusammensetzung nach Anspruch 5, **dadurch gekennzeichnet, dass** die Base ein tertiäres Amin ist.

7. Zusammensetzung nach Anspruch 5 oder 6, **dadurch gekennzeichnet, dass** die latente Verbindung aus den Ammoniumsalzen von Alpha-ketocarboxylsäuren, den Ammoniumsalzen von Carboxylsäuren, die eine aromatische Gruppe tragen, den Salzen von N-(benzophenonymethyl)-tri-N-alkyl-ammoniumtriphenylalkylboraten, den Salzen von Benzhydrylammonium und den Iodiden von Trialkylfluorenylammonium oder einem ihrer Gemische ausgewählt ist.

8. Zusammensetzung nach einem der Ansprüche 1 bis 4, **dadurch gekennzeichnet, dass** die latente Verbindung eine nichtionische Verbindung ist, die imstande ist, eine Base als Vernetzungskatalysator freizusetzen.

9. Zusammensetzung nach Anspruch 8, **dadurch gekennzeichnet, dass** die Base ein tertiäres Amin ist.

10. Zusammensetzung nach Anspruch 9, **dadurch gekennzeichnet, dass** das tertiäre Amin aus den Diazabicyclooctanen, den N-alky-morpholinen, den Tetramethylguanidinen (TMG), den Diazabicyclononenen (DBN) und den Diazabicycloundecenen (DBU) ausgewählt ist.

11. Zusammensetzung nach Anspruch 9 oder 10, **dadurch gekennzeichnet, dass** die latente Verbindung aus den Diazabicyclononanen und den Diazabicycloundecanen ausgewählt ist.

12. Zusammensetzung nach Anspruch 9, **dadurch gekennzeichnet, dass** die latente Verbindung aus dem 4-(Methylthiobenzoyl)-1-morpholinoethan und dem (4-Morpholinobenzoyl)-1-benzyl-1imethylaminpropan ausgewählt ist.

13. Herstellungsverfahren eines vernetzten Artikels, das die Schritte umfasst, die bestehen im:
i. Erhitzen der gemäß den Ansprüchen 1 bis 12 definierten Zusammensetzung, um den Vernetzungskatalysator der latenten Verbindung freizusetzen, und
iii. Vernetzen der in Schritt i hergestellten Zusammensetzung.

14. Verfahren nach Anspruch 13, **dadurch gekennzeichnet, dass** der Erhitzungssschritt i auf Ebene des Extrusionskopfes eines Extruders oder nach Extrudieren der Zusammensetzung durchgeführt wird.

15. Herstellungsverfahren eines vernetzten Artikels, das die Schritte umfasst, die bestehen im:
ii. Aussetzen der gemäß den Ansprüchen 1 bis 12 definierten Zusammensetzung einer aktinischen Strahlung, um den Vernetzungskatalysator der latenten Verbindung freizusetzen, und
iii. Vernetzen der in Schritt ii hergestellten Zusammensetzung.

16. Verfahren nach Anspruch 15, **dadurch gekennzeichnet, dass** der Expositionsschritt ii einer aktinischen Strahlung bei einer Strahlung mit einer Wellenlänge von 185 nm bis 400 nm durchgeführt wird.

17. Verfahren nach Anspruch 15 oder 16, **dadurch gekennzeichnet, dass** der Expositionsschritt ii nach dem Extrudieren der Zusammensetzung durchgeführt wird.
